# EUROPEAN PATENT APPLICATION

(11) **EP 1 607 135 A1**
(43) Date of publication of application: **21.12.2005**
(21) Application number: 03816456.2
(22) Date of filing: 29.07.2003
(51) Int. Cl.: B01J 23/86, C01B 3/48

(54) **CARBON MONOXIDE REFORMING CATALYST COMPOSITION**

(30) Priority: 24.03.2003 JP 2003081328
(71) Applicant: Kyushu Electric Power Co., Inc., Fukuoka-ken 810-0004 (JP)
(72) Inventor: UCHIDA, Yoshitaka c/oKyushu Electric Power Co. Inc, Fukuoka 815-8520 (JP); TSUJIMOTO, Keigo c/oKyushu Electric Power Co. Inc., Fukuoka 815-8520 (JP)
(74) Representative: Vossius & Partner
(86) International application number: PCT/JP2003/009619
(87) International publication number: WO 2004/085056

(57) **Abstract**

Disclosed is a carbon-monoxide conversion catalyst composition, which comprises copper, magnesium and chromium serving as a catalytic material for inducing a conversion reaction between carbon monoxide and steam to convert the carbon monoxide to hydrogen and carbon dioxide. The catalyst composition may further include iron to provide enhanced catalytic activity. Preferably, the atomic ratio of the magnesium to the copper and the atomic ratio of the chromium to the copper are in the range of 0.75 to 1.2 and in the range of 0.67 to 1, respectively. The atomic ratio of the iron to the copper is preferably in the range of 0.67 to 1.

## Description

### TECHNICAL FIELD

The present invention relates to a carbon-monoxide conversion catalyst composition for inducing a conversion reaction between steam and carbon monoxide to convert the carbon monoxide to hydrogen and carbon dioxide.

### BACKGROUND ART

A technique of inducing a reaction between steam (H₂O) and carbon monoxide (CO) to create hydrogen (H₂), so called carbon-monoxide conversion reaction CO + H₂O ↔ CO₂ + H₂, has been industrially utilized in a production process of ammonia synthesis gas or hydrogen based on stream reforming of hydrocarbon, since a long time ago. In this reaction, an iron-chromium-based catalyst is used in a reaction temperature range of 350 to 550°C, and a copper-zinc-based catalyst is used in a reaction temperature range of about 200 to 250°C as a low-temperature conversion catalyst advantageous in terms of thermal equilibrium.

The carbon-monoxide conversion reaction has also been used in a process of reducing the concentration of carbon monoxide to be contained in hydrogen for fuel cells, obtained through hydrocarbon reforming or the like (Japanese Patent Laid-Open Publication No. 2002-224570). The fuel cell has dimensional restrictions because it is generally intended to be installed in domestic cogeneration systems or movable bodies, such as automobiles. Thus, there is the need for providing a highly active carbon-monoxide conversion catalyst having a high carbon-monoxide conversion ratio under a high space velocity using a small reactor. The conventional iron-chromium-based catalyst has an undesirably high activation or working temperature, and the copper-zinc-based catalyst has difficulties in obtaining a sufficient carbon monoxide conversion ratio under the condition of a high space velocity. That is, while a lower reaction temperature is advantageous to the carbon-monoxide conversion reaction in terms of thermal equilibrium because it is an exothermic reaction, the lower reaction temperature will cause an undesirably lowered reaction rate of the carbon-monoxide conversion reaction.

### DISCLOSURE OF INVENTION

It is therefore an object of the present invention to provide a carbon-monoxide conversion catalyst composition capable of inducing a conversion reaction between carbon monoxide and steam in a low-temperature range to convert the carbon monoxide to hydrogen and carbon dioxide at a high conversion ratio.

In order to achieve this object, the present invention provides a carbon-monoxide conversion catalyst composition comprising copper, magnesium and chromium which serve as a catalytic material for inducing a conversion reaction between carbon monoxide and steam to convert the carbon monoxide to hydrogen and carbon dioxide.

### BEST MODE FOR CARRYING OUT THE INVENTION

A synthetic process and example of a carbon-monoxide conversion catalyst composition according to the present invention will now be described.

The carbon-monoxide conversion catalyst composition of the present invention essentially comprises copper, magnesium and chromium, and may further optionally include iron to provide enhanced catalytic activity. Preferably, the atomic ratio of the magnesium to the cupper is in the range of 0.75 to 1.2, and the atomic ratio of the chromium to the cupper is in the range of 0.67 to 1. Further, the atomic ratio of the iron to the cupper is preferably in the range of 0.67 to 1. If these atomic ratios are out of the above corresponding ranges, the catalytic activity will be excessively lowered.

The carbon-monoxide conversion catalyst composition may be produced through a process having the following 4 steps.
(1) The step of preparing an aqueous solution containing a copper compound, a magnesium compound and a chromium compound dissolved therein.
(2) The step of preparing an aqueous solution containing alkali metal carbonate and alkali metal hydroxide dissolved therein.
(3) The step of adding the aqueous solution (1) to the aqueous solution (2), and aging the mixed solution to form a precipitate.
(4) The step of rinsing/drying the obtained precipitate, and then heating the dried precipitate in an oxidation atmosphere.

The copper compound to be dissolved in the step (1) may be any compound capable of disassociating Cu²⁺ therefrom in the aqueous solution. For example, the copper compound may include copper nitrate, copper sulfate, copper chloride and copper acetate. The magnesium compound to be dissolved in the step (1) may be any compound capable of disassociating Mg²⁺ therefrom in the aqueous solution. For example, the magnesium compound may include magnesium nitrate, magnesium sulfate, magnesium chloride and magnesium acetate. The chromium compound to be dissolved in the step (1) may be any compound capable of disassociating Cr³⁺ therefrom in the aqueous solution. For example, the chromium compound may include chromium nitrate, chromium sulfate, chromium chloride and chromium acetate.

In the step (1), an iron compound may be added according to need. This iron compound may be any compound capable of disassociating Fe³⁺ therefrom in the aqueous solution. For example, the iron compound may include iron nitrate, iron sulfate, iron chloride and iron acetate.

In the step (2), the aqueous solution may be prepared by dissolving alkali metal carbonate and alkali metal hydroxide in a solvent, such as water. The alkali metal carbonate may include sodium carbonate and potassium carbonate. The alkali metal hydroxide may include sodium hydroxide and potassium hydroxide.

In the step (3), the aqueous solution prepared in step (1) is gradually added to the aqueous solution prepared in step (2). During this operation, it is required to control the pH of the mixed solution in the range of 9 to 11.

Consequently, a precipitate as a compound of the metallic salts is precipitated in the mixed solution. This mixed solution is aged for a long time-period to crystallize the precipitate. During this operation, the aging temperature is set typically in the range of 20 to 100°C, preferably in the range of 40 to 80°C. The aging time-period is preferably set in the range of 10 to 30 hours.

In the step (4), the obtained precipitate is rinsed/dried and then heated/burnt in an oxidation atmosphere, such as air, to form a catalyst. The heating temperature is set typically in the range of 200 to 500°C, and the heating time-period is typically in the range of about 0.5 to 10 hours.

While the obtained sintered power can be directly used for the conversion reaction, it may be formed in tablet-compression-molded pellets, extrusion-molded pellets or a honeycomb structure, and then used for the conversion reaction.

While various examples of the present invention will be described below, it should be understood that the present invention is not limited to such specific examples.

### [Inventive Example 1]

An aqueous solution prepared by dissolving 0.05 mol of copper nitrate (Cu (NO₃)₂ · 3H₂O), 0.05 mol of magnesium nitrate (Mg (NO₃)₂ · 6H₂O) and 0.05 mol of chromium nitrate (Cr (NO₃)₃ · 9H₂O) in 103 ml of water was gradually added into an aqueous solution prepared by dissolving 0.1 mol of sodium carbonate (Na₂CO₃) and 0.33 mol of sodium hydroxide (NaOH) in 102 ml of water and then maintained at 65°C, while keeping the pH of the mixture in the range of 9 to 11. Then, the mixture was aged at 65°C for 18 hours to form a precipitate therein.

The obtained crystalline precipitate was filtered/rinsed in water/dried, and burnt at 400°C for 2 hours to obtain composite oxide catalyst powder containing Cu, Mg and Cr. The powder was shaped using a hydraulic pressing machine, and then cut into particles each having a particle size of about 2 to 3 mm. The catalyst particles were subjected to a carbon-monoxide reaction test under the following conditions.
Catalyst Amount: 1.5 ml
Space Velocity: 20000 h⁻¹
Reaction Temperature: 250°C
Reactive Gas: 5% CO-10% CO₂-30% H₂O-55% H₂
, wherein before the reaction test, the catalyst particles were subjected to a reduction treatment in a hydrogen stream for 2 hours.

The test result is shown in Table 1. The catalyst in Inventive Example 1 had a carbon-monoxide conversion ratio of 55.9 %.

### [Inventive Example 2]

Except that an aqueous solution prepared by dissolving 0.03 mol of Cu (NO₃)₂ · 3H₂O, 0.036 mol of Mg (NO₃)₂ · 6H₂O and 0.024 mol of Cr (NO₃)₃ · 9H₂O in 62 ml of water was added into an aqueous solution prepared by dissolving 0.048 mol of Na₂CO₃ and 0.198 mol of NaOH in 63 ml of water, catalyst particles were prepared in the same way as that in Inventive Example 1.

As shown in Table 1, the catalyst in Inventive Example 2 had a carbon-monoxide conversion ratio of 64.8 %.

### [Inventive Example 3]

Except that an aqueous solution prepared by dissolving 0.025 mol of Cu (NO₃)₂· 3H₂O, 0.020 mol of Mg (NO₃)₂ · 6H₂O and 0.030 mol of Cr (NO₃)₃ · 9H₂O in 52 ml of water was added into an aqueous solution prepared by dissolving 0.060 mol of Na₂CO₃ and 0.165 mol of NaOH in 102 ml of water, catalyst particles were prepared in the same way as that in Inventive Example 1.

As shown in Table 1, the catalyst in Inventive Example 3 had a carbon-monoxide conversion ratio of 62.2 %.

### [Inventive Example 4]

Except that an aqueous solution prepared by dissolving 0.02 mol of Cu (NO₃)₂ · 3H₂O, 0.02 mol of Mg (NO₃)₂ · 6H₂O, 0.02 mol of Fe (NO₃)₃ · 9H₂O and 0.02 mol of Cr (NO₃)₃ · 9H₂O in 55 ml of water was added into an aqueous solution prepared by dissolving 0.08 mol of Na₂CO₃ and 0.176 mol of NaOH in 55 ml of water, catalyst particles were prepared in the same way as that in Inventive Example 1.

As shown in Table 1, the catalyst in Inventive Example 4 had a carbon-monoxide conversion ratio of 74.5 %.

### [Inventive Example 5]

Except that an aqueous solution prepared by dissolving 0.02 mol of Cu (NO₃)₂ · 3H₂O, 0.024 mol of Mg (NO₃)₂· 6H₂O, 0.02 mol of Fe (NO₃)₃ · 9H₂O and 0.016 mol of Cr (NO₃)₃ · 9H₂O in 55 ml of water was added into an aqueous solution prepared by dissolving 0.072 mol of Na₂CO₃ and 0.176 mol of NaOH in 54 ml of water, catalyst particles were prepared in the same way as that in Inventive Example 1.

As shown in Table 1, the catalyst in Inventive Example 5 had a carbon-monoxide conversion ratio of 85.4 %.

### [Inventive Example 6]

Except that an aqueous solution prepared by dissolving 0.024 mol of Cu (NO₃)₂ · 3H₂O, 0.024 mol of Mg (NO₃)₂ · 6H₂O, 0.016 mol of Fe (NO₃)₃ · 9H₂O and 0.016 mol of Cr (NO₃)₃ · 9H₂O in 55 ml of water was added into an aqueous solution prepared by dissolving 0.064 mol of Na₂CO₃ and 0.176 mol of NaOH in 57 ml of water, catalyst particles were prepared in the same way as that in Inventive Example 1.

As shown in Table 1, the catalyst in Inventive Example 6 had a carbon-monoxide conversion ratio of 60.1 %.

### [Comparative Example 1]

Except that an aqueous solution prepared by dissolving 0.030 mol of Cu (NO₃)₂ · 3H₂O and 0.060 mol of Mg (NO₃)₂ · 6H₂O in 163 ml of water was added into an aqueous solution prepared by dissolving 0.108 mol of Na₂CO₃ in 136 ml of water, catalyst particles were prepared in the same way as that in Inventive Example 1.

As shown in Table 1, the catalyst in Comparative Example 1 had a carbon-monoxide conversion ratio of 42.3 %.

### [Comparative Example 2]

Except that an aqueous solution prepared by dissolving 0.03 mol of Cu (NO₃)₂ · 3H₂O, 0.03 mol of Mg (NO₃)₂ · 6H₂O and 0.03 mol of Fe (NO₃)₃ · 9H₂O in 62 ml of water was added into an aqueous solution prepared by dissolving 0.06 mol of Na₂CO₃ and 0.198 mol of NaOH in 61 ml of water, catalyst particles were prepared in the same way as that in Inventive Example 1.

As shown in Table 1, the catalyst in Comparative Example 2 had a carbon-monoxide conversion ratio of 44.9 %.

### [Comparative Example 3]

A commercially available carbon-monoxide conversion Cu-Zn-based catalyst (available from SÜD-CHEMIE CATALYSTS, JAPAN, INC.) was cut into particles each having a particle size of about 2 to 3 mm. As shown in Table 1, the catalyst in Comparative Example 3 had a carbon-monoxide conversion ratio of 53.9 %.

**Table 1**

| Example | Catalyst Composition | Carbon-Monoxide Conversion Ratio (%) (250°C) |
|---|---|---|
| Inventive Example 1 | Cu: Mg: Cr = 1 : 1 : 1 | 55.9 |
| Inventive Example 2 | Cu: Mg: Cr = 1 : 1.2 : 0.8 | 64.8 |
| Inventive Example 3 | Cu: Mg: Cr = 1.2 : 0.9 : 0.9 | 62.2 |
| Inventive Example 4 | Cu: Mg: Fe: Cr = 1 : 1 : 1 : 1 | 74.5 |
| Inventive Example 5 | Cu: Mg: Fe: Cr = 1 : 1.2 : 1 : 0.8 | 85.4 |
| Inventive Example 6 | Cu: Mg: Fe: Cr = 1.2 : 1.2 : 0.8 : 0.8 | 60.1 |
| Comparative Example 1 | Cu: Mg = 1 : 2 | 42.3 |
| Comparative Example 2 | Cu: Mg: Fe = 1 : 1 : 1 | 44.9 |
| Comparative Example 3 | Commercially available Cu-Zn industrial catalyst | 53.9 |

As seen in Table 1, the carbon-monoxide conversion catalyst composition of the present invention can induce a conversion reaction between carbon monoxide and steam in a low-temperature range to convert the carbon monoxide to hydrogen and carbon dioxide at a high conversion ratio.

### INDUSTRIAL APPLICABILITY

The carbon-monoxide conversion catalyst composition of the present invention can be used for reducing the concentration of carbon monoxide to be contained in hydrogen obtained through hydrocarbon reforming or the like.

## Claims

1. A carbon-monoxide conversion catalyst composition comprising copper, magnesium and chromium which serves as a catalytic material for inducing a conversion reaction between carbon monoxide and steam to convert the carbon monoxide to hydrogen and carbon dioxide.

2. The carbon-monoxide conversion catalyst composition as defined in claim 1, wherein the atomic ratio of the magnesium to the copper and the atomic ratio of the chromium to the copper are in the range of 0.75 to 1.2 and in the range of 0.67 to 1, respectively.

3. The carbon-monoxide conversion catalyst composition as defined in claim 2, which further includes iron.

4. The carbon-monoxide conversion catalyst composition as defined in claim 3, wherein the atomic ratio of the iron to the copper is in the range of 0.67 to 1.
